# EUROPÄISCHE PATENTSCHRIFT

(11) **EP 3 315 254 B1**
(45) Veröffentlichungstag und Bekanntmachung des Hinweises auf die Patenterteilung: **21.07.2021**
(21) Anmeldenummer: 17197110.4
(22) Anmeldetag: 18.10.2017
(51) Int. Cl.: B23Q 17/24, G02B 7/02

(54) **MESSSYSTEM ZUR MESSUNG AN WERKZEUGEN IN EINER WERKZEUGMASCHINE**
MEASURING SYSTEM FOR MEASUREMENT ON TOOLS IN A MACHINE TOOL
SYSTÈME DE MESURE PERMETTANT DE MESURER DES OUTILS DANS UNE MACHINE-OUTIL

(30) Priorität: 24.10.2016 DE 102016013045
(43) Veröffentlichungstag der Anmeldung: 02.05.2018
(73) Patentinhaber: Blum-Novotest GmbH, 88287 Grünkraut-Gullen (DE)
(72) Erfinder: DILGER, Roland, 88214 Ravensburg (DE); MOERSCH, Norbert, 88239 Wangen (DE); MAIER, Gregor, 88284 Mochenwangen (DE)
(74) Vertreter: Schmidt, Steffen J.

(56) Entgegenhaltungen:
- EP-A1- 1 589 587
- EP-A1- 2 843 455
- CN-A- 103 676 157
- DE-A1-102007 041 272
- DE-U1- 8 816 903

## Beschreibung

### Hintergrund

Nachstehend wird ein Messsystem zur berührungslosen oder zur taktilen Messung an Werkzeugen in einer Werkzeugmaschine beschrieben. Derartige Messsysteme sind bei der Span abhebenden oder Material abtragenden Bearbeitung (z. B. Fräsen, Drehen, Schleifen, Hobeln, Bohren, Senken, Reiben, Erodieren und dergleichen), auch in kombinierten Dreh-/Fräsmaschinen oder Fräs-/Drehmaschinen mit stehenden oder sich drehenden Werkzeugen einzusetzen. Merkmale und Eigenschaften des Messsystems sind in den Ansprüchen definiert; aber auch die Beschreibung und die Figuren offenbaren Charakteristika des Messsystems und seiner unterschiedlichen Aspekte.

### Stand der Technik

Lasersysteme zur Messung an Werkzeugen haben bisher eine oder mehrere Pneumatikzu- und -ableitungen, um Sperrluft bereitzustellen, einen Durchtritt für Laserlicht zu steuern, und das Werkzeug zu reinigen, etc. Außerdem erfordern sie elektrische Leitungen zur Bereitstellung der Versorgungsleistung und der Betriebssignale (Spannungsversorgung der Steuerung, Laseraktivierung, Messsignale, etc.). Entsprechendes gilt auch für taktil messende Messsysteme in Werkzeugmaschinen.

Derartige Messsysteme sind üblicherweise auf einem Maschinentisch der Werkzeugmaschine, innerhalb deren Arbeitsraums installiert. Um den Arbeitsraum möglichst frei zu lassen oder auch keine Kollisionsbereiche mit den verfahrenden Werkzeugen zu schaffen, werden die Messsysteme in manchen Bauarten auch über eine Schwenk- oder Lineareinheit in eine im Arbeitsraum befindliche Messposition gefahren und nach dem Messvorgang am Werkzeug wieder in eine außerhalb des Arbeitsraums befindliche Park-/Ruheposition bewegt. Bei einfacheren Varianten wird das Messsystem insgesamt abgebaut, sofern es in bestimmten Fertigungsabläufen nicht regelmäßig notwendig ist.

Diese Messsysteme stellen im Arbeitsraum der Maschine in der Regel eine platzraubende Störkontur dar und schränken den Nutzraum ein, oder sie stellen eine ständige Kollisionsgefahr dar. Damit sind diese Messsysteme der Gefahr von Beschädigungen durch große Werkstücke, Späne oder auch Werkzeuge ausgesetzt. Zusätzlich benötigen sie eine oder mehrere Leitungen im Arbeitsraum der Maschine.

Die Bereitstellung, Verlegung und Montage der Versorgungs- und Steuerleitungen (Druckluft- und elektrische Leitungen) stellt insbesondere auch bei verfahr- oder schwenkbaren Messsystemen einen erheblichen Aufwand dar; auch das passgenaue Montieren des Messsystems sowie das Anschließen der Pneumatik- / Elektrikverbinder ist aufwendig. Üblicherweise werden mehrere Pneumatikleitungen und mehrere elektrische Leitungen benötigt, um das Messsystem mit der Maschinensteuerung der Werkzeugmaschine zu verbinden.

Der Lichtmengensensor optoCONTROL 1200/1201 der MICRO-EPSILON Eltrotec Gmbh (www.micro-epsilon.com) wird zur Spalt-, Kanten- und Lichtmengenmessung eingesetzt und besteht aus einer Lichtquelle und einer davon separaten Empfängereinheit. Die Steuerungselektronik ist im Empfängergehäuse untergebracht. Die Empfängereinheit und die Lichtquelle sind getrennt voneinander montierbar und werden über separate Versorgungs- und Ausgangskabel betrieben. Eine pneumatische Versorgung ist bei diesem Messsystem nicht vorgesehen.

Ein einwechselbarer "Pick Up Toolsetter" 35.40 von m&h Inprocess Messtechnik GmbH (www.mh-inprocess.com) mit Infrarot-Datenübertragung stellt eine Lösung ohne Störkontur und Kabel dar. Dieses taktile Messsystem ist manuell oder automatisch in eine an der Seite des Arbeitstisches angeflanschte Wechselhalterung einwechselbar. Das Messsystem wird von außen in eine selbst zentrierende Halterung gedrückt und rastet dort ein. Nach dem taktilen Vermessen des Werkzeugs kann das Messsystem aus der Halterung gezogen werden. Bei diesem Messsystem sind ebenfalls keine Pneumatikleitungen vorgesehen; es ist deshalb nur sehr bedingt mit dem Messsystem der hier betrachteten Gattung vergleichbar.

Ein Beispiel eines berührungslos messenden Werkzeugabtasters in Gestalt einer Lasermessstrecke ist zum Beispiel aus der DE 10 2008 017 349 A1 bekannt. Ein solches Messsystem dient zur Messung an Werkzeugen in einer Werkzeugmaschine. Es hat eine Lichtschrankenanordnung zum Beispiel zur Positionsbestimmung eines Werkzeuges oder zur Bestimmung der längsten Schneide eines rotierenden Werkzeuges in der Werkzeugmaschine. Das Messsystem hat eine Pneumatiksteuerung, um in dem Messsystem Druckluft für verschiedene Funktionen (Laserstrahlsender und Laserstrahlempfänger freiblasen, Schutzblenden vor dem Laserstrahlsender und Laserstrahlempfänger öffnen/schließen) bereitzustellen und mindestens eine elektronische Steuerung zum Betreiben der Lichtschrankenanordnung, zum Empfangen von Messsignalen von der Lichtschrankenanordnung und zum Abgeben von Messsignalen in einem Signalübertragungsmedium an die Maschinensteuerung, sowie zum Bereitstellen von Steuersignalen für die Pneumatiksteuerung. Aus diesem Dokument ist eine Variante eines Messsystems zur berührungslosen Messung an Werkzeugen in einer Werkzeugmaschine bekannt, die ohne elektrische Verbinder auskommt, weil die elektrische Versorgungsenergie mittels einer fluidelektrischen Wandlers bereitgestellt wird, dem aus einer aus anderen Gründen erforderlichen Pneumatikquelle Druckluft eingespeist wird. Dies reduziert den Aufwand und etwaige Fehlerquellen in der elektrischen Verbindung. Weitere berührungslose Messvorrichtungen sind aus DE 10 2007 041272 A1 bekannt. CN 103 676 157 A, EP 2 843 455 A1, DE 88 16 903 U1 und EP 1 589 587 A1 offenbaren jeweils verschiedene mehrteilige Linsenfassungen für Lichtempfangs- und Sendevorrichtungen.

### Aufgabe

Ausgehend hiervon besteht das Problem darin, eine Lösung für einen sicheren und zuverlässigen Betrieb eines Messsystems für Messungen an stehenden oder rotierenden, Material abtragenden Werkzeugen in einer Werkzeugmaschine anzugeben.

### Vorgeschlagene Lösung

Diese Aufgabe löst das im Patentanspruch 1 angegebene berührungslos messende Messsystem. Dieses Messsystem mit einem einen Lichtsenderteil und einen Lichtempfängerteil aufweisenden berührungslos messenden Messgerät dient zur Positionsbestimmung eines Werkzeuges oder zur Bestimmung der längsten Schneide eines rotierenden Werkzeuges oder für andere Messaufgaben in einer Werkzeugmaschine. Dem Lichtsenderteil und/oder dem Lichtempfängerteil ist eine optische Linsenanordnung zur Formung und Fokussierung eines Lichtstrahls von dem Lichtsenderteil zu dem Lichtempfängerteil zugeordnet. Die optische Linsenanordnung ist in einer Linsenfassung aufgenommen. Die Linsenfassung weist eine innere und eine äußere, jeweils zylindrische Hülse auf. Die Linsenanordnung ist in der inneren Hülse eingesetzt, die von der äußeren Hülse zumindest teilweise eingefasst ist, und die Linsenfassung mit der Linsenanordnung ist in einer Wandung des Lichtsenderteils und/oder des Lichtempfängerteils aufgenommen ist. Die äußere Hülse ist relativ zur inneren Hülse starr und formbeständig. Die innere Hülse ist dazu eingerichtet, beim Einbringen in die äußere Hülse elastisch oder plastisch verformt zu werden, und die innere und/oder die äußere Hülse weist in Längsrichtung verlaufende Schwächungs- und/oder Dehnungszonen auf. Die innere Hülse legt die Linsenanordnung geometrisch fest, wobei die innere Hülse und/oder die äußere am Innen- und/oder Außenumfang verteilte, radial nach innen bzw. außen orientierte Pressstellen aufweist. Die Linsen der Linsenanordnung sind in der inneren Hülse eingelegt und der Innenquerschnitt der äußeren Hülse und der Außenquerschnitt der inneren Hülse sind so zueinander dimensioniert, dass die äußere Hülse die innere Hülse in radialer Richtung gegen die Linsen drängt. Weitere Aspekte werden durch die abhängigen Ansprüche definiert.

Nachstehend werden das berührungslos messende Messsystem ohne einen hier ebenfalls offenbarten und mit dem Messgerät zusammenwirkenden Mehrzweckschnittstellensockel auch als Messgerät bezeichnet. Der Mehrzweckschnittstellensockel ist jedoch nicht Teil der beanspruchten Erfindung. Die folgenden Ausführungen betreffend den Mehrzweckschnittstellensockel, die Pneumatiksteuerung und die Schutz-/Schließeinrichtung dienen zur Illustration und zum Verständnis eines berührungslos messenden Messsystems und fallen nicht in den Schutzumfang der Ansprüche.

Der Mehrzweckschnittstellensockel weist folgende Merkmale auf:
- wenigstens einen mit einem Gegenanschlag an dem Messgerät korrespondierenden mechanischen Anschlag zur Aufnahme und wiederholgenauen Platzierung des Messgeräts an dem Mehrzweckschnittstellensockel;
- wenigstens eine mit einer ersten Signalübergabestelle an dem Messgerät korrespondierende zweite Signalübergabestelle an dem Mehrzweckschnittstellensockel; und/oder
- wenigstens eine mit einer ersten Fluidübergabestelle an dem Messgerät korrespondierende zweite Fluidübergabestelle an dem Mehrzweckschnittstellensockel.

Dieser Mehrzweckschnittstellensockel bietet eine mechanische, eine elektrisch/optische Signal-, und/ oder pneumatische Fluid-Verbindung zwischen der Maschinensteuerung der Werkzeugmaschine und dem Messgerät. Die mechanische Schnittstelle kann zum Beispiel als Schraub-, Rast-, Dreh- oder Klemmfixierung, als Schwalbenschwanz- oder Bajonettverbindung anwenderfreundlich gestaltet sein. Diese Schnittstelle bietet eine mechanisch wiederholgenaue Messgeräteplatzierung. Vorgespannte Stifte oder Spannstifte sind in der Lage, kleinere Toleranzen zwischen dem Mehrzweckschnittstellensockel und dem Messgerät ausgleichen. Auch Federbleche oder magnetische Kupplungen sind als Verbindungskomponenten einsetzbar. Dazu kann der Mehrzweckschnittstellensockel eine oder mehrere, vorzugsweise oberflächenvergütete Anlageflächen aufweisen, oder einen oder mehrere vorzugsweise federnde Passstifte.

Der mechanische Anschlag kann so gestaltet sein, dass das Messgerät in zwei unterschiedlichen, um 180° gedrehten Orientierungen mit dem Mehrzweckschnittstellensockel zu verbinden ist.

Bei dem Mehrzweckschnittstellensockel hat in einer Variante die zweite Signalübergabestelle eine erste und eine zweite Kontaktstelle mit jeweils mehreren Kontakten. Diese Kontakte können elektrische (ohmsche) und oder lichtwellenleitergestützte Verbinder oder Kontakte sein. Dabei sind die erste und die zweite Kontaktstelle voneinander beabstandet, und die mehreren Kontakte der einen Kontaktstelle bezogen auf eine Mitte zwischen den beiden Kontaktstellen punktsymmetrisch zu den mehreren Kontakten der anderen Kontaktstelle angeordnet. Das Messgerät hat gegengleiche erste und eine zweite Kontaktstellen. Damit ist das Verbinden des Messgeräts mit dem Mehrzweckschnittstellensockel in zwei unterschiedlichen, um 180° gedrehten Orientierungen sehr komfortabel möglich. Durch die beiden gegengleichen ersten und zweiten Kontaktstellen werden die Signal-/Versorgungsspannungskontakte parallel bereitgestellt. Dies verringert auch Fehler der Anordnung im Betrieb, da jede Signalübergabe durch diese Anordnung doppelt erfolgt. Leitungen, über welche größere Ströme geführt werden (zum Beispiel Energieversorgung), werden dabei bei Bedarf über 2 x 2, 2 x 3 oder mehr einzelne Kontakte übergeben.

Dieser Mehrzweckschnittstellensockel hat zur Verbindung mit dem Messgerät in einem Beispiel als Kontaktübergabe auf einer Seite (Messgerät oder Sockel) eine gedruckte Leiterplatte mit vergoldeten Kontaktstellen, und auf einer korrespondierenden Seite (Sockel oder Messgerät) eine Leiterplatte mit Kontaktstiften oder Kontaktfedern. Auch Mischformen zwischen dieser Aufteilung sind möglich. Die Kontaktstifte oder Kontaktfedern können SMTgelötet (SMT = Oberflächen-Montage-Technik), genietet, auf- oder eingelötet sein; auch können die Kontaktstifte federnd ausgestaltet sein. Die gedruckten Leiterplatten übergeben / übernehmen die Signal- und Versorgungsleitungen auf/von die/den Kontaktstifte oder Kontaktfedern und Kontaktstellen. In einer bevorzugten Variante befinden sich die federnden Kontakte an der Unterseite des Messgeräts und die Kontaktflächen an der Oberseite des Mehrzweckschnittstellensockels.

Darüber hinaus hat der Mehrzweckschnittstellensockel eine die Signalübergabestelle und die Fluidübergabestelle umgebende Dichtungsanordnung, die mit einer seitlichen oder unteren Kontaktfläche des Messgeräts korrespondiert. Diese Dichtungsanordnung kann als Ringdichtung ausgestaltet sein, die bei angebautem Messgerät Kühlmittel und Schmutz von der Schnittstelle abhält.

Wenn das Messgerät nicht mit dem Mehrzweckschnittstellensockel verbunden ist, bildet die jeweilige Leiterplatte mit ihren freiliegenden elektrischen / faseroptischen Kontakten die äußere Haut des Messgeräts und des Mehrzweckschnittstellensockels im Bereich der Übergabestelle. Dazu ist die Leiterplatte ohne Durchbrüche gestaltet und fluid-/staubdicht in das Sockel- bzw. Messgerätegehäuse einzubauen. So kann bei nicht an dem Mehrzweckschnittstellensockel angedocktem Messgerät kein Staub, Kühl-/Schmiermittel ins Gehäuseinnere des Messgeräts oder des Mehrzweckschnittstellensockels gelangen.

Die vorstehend erwähnten Federkontaktstifte haben bewegliche Teile mit Spalten. Sollten bei freiliegender Übergabestelle des Mehrzweckschnittstellensockels, also bei nicht angedocktem Messgerät, Späne, Staub oder Kühlmittel auf die Schnittstelle gelangen, ist es nahezu unmöglich, die Kontaktstifte mit den Spalten in ihrer Halterung zu reinigen.Um ein Eindringen solcher Verunreinigungen zu verhindern, ist in unterschiedlichen Varianten vorgesehen, mit Hilfe einer oder mehrerer Dichtmembranen abgedichtete Kontaktstellen zu bilden. Die so gestalteten Schnittstellen bilden mit dem Gehäuse des Messgeräts / des Mehrzweckschnittstellensockels jeweils eine praktisch nahezu geschlossene Oberfläche, die sich leicht reinigen lässt.

So können die beiden Kontaktstellen an dem Mehrzweckschnittstellensockel und dem Messgerät nach außen abgedichtet gestaltet sein. In einer Variante sind dazu SMT-lötbare Federkontaktstift-Blöcke vergesehen. In einer anderen Variante sind SMT-gelötete oder genietete Kontaktfedern eingesetzt. Die Kontakte sind mittels einer flexiblen Membran abgedichtet, in welche die einzelnen Kontakte eingebettet sind, oder welche die einzelnen Kontakte seitlich dicht umschließt. Damit ist die Übergabe-Schnittstelle bei nicht angebautem Messgerät gegen eindringendes Kühlmittel abgedichtet. Bei den mittels der flexiblen Membran abgedichteten Kontakten (vorzugsweise am Messgerät) kann kein Schmier- oder Kühlmittel in die Zwischenräume der Kontaktstiftteile gelangen.

Diese Anordnungen lassen sich zum Reinigen leicht mit gereinigter - staub- und ölfreier - Druckluft über eine Düse abblasen oder mit einem Tuch abwischen, sollte vor der Montage des Messgeräts an dem Mehrzweckschnittstellensockel z.B. Kühlmittel an die Kontaktstelle gelangt sein.

Die zusätzliche Dichtmembran schützt die Kontakte vor Kühlmittel und erleichtert die Reinigung der elektrischen Schnittstelle.

Die oben erwähnte Abdichtung des Schnittstellenbereichs durch die Dichtungsanordnung (Ringdichtung) ist von der Abdichtung der beiden Kontaktstellen nach außen zu unterscheiden; sie können alternativ oder beide vorgesehen sein.

Der Mehrzweckschnittstellensockel hat in einer Variante eine Pneumatiksteuerung, umfassend Pneumatikkomponenten wie Ventile, Drosseln, Rückschlagventile, Filterkapsel, und/ oder Druckminderer oder dergl., zum Bereitstellen von unter Druck stehendem Fluid für verschiedene Funktionen in der Lichtschrankenanordnung, zum Beispiel die pneumatisch zu betätigenden Schließblenden für den Lichtstrahl in der Lichtschrankenanordnung. Ein Vorteil dieser Variante ist, dass der Mehrzweckschnittstellensockel nur eine einzige Fluidversorgung benötigt. Aus dieser einen Fluidzufuhr werden im Mehrzweckschnittstellensockel die Funktionen Reinigung, Verschlusskolben und Sperrluft für das Lichtschranken-Messsystem über drei Fluidübergabestellen bereitgestellt. In Varianten, bei denen der Mehrzweckschnittstellensockel keine Pneumatikkomponenten enthält, befindet sich die pneumatische Steuerung der Funktionen Reinigung, Verschlusskolben und Sperrluft für das Lichtschranken-Messsystem entweder in dem Lichtschranken-Messsystem oder ist aufstromseitig zu dem Mehrzweckschnittstellensockel. Im ersten Fall ist lediglich eine nur eine einzige Fluidversorgung und eine Fluidübergabestelle im Mehrzweckschnittstellensockel erforderlich. In zweiten Fall hat sind im Mehrzweckschnittstellensockel drei separate Fluidversorgungen für die Funktionen Reinigung, Verschlusskolben und Sperrluft, und drei korrespondierende Fluidübergabestellen vorgesehen.

In einer weiteren Variante ist zusätzlich zur oder anstelle der Pneumatiksteuerung eine elektronische Steuerung zum Bereitstellen von Steuersignalen für den Betrieb der Lichtschrankenanordnung, zum Empfangen von Messsignalen von der Lichtschrankenanordnung, zum Abgeben von Messsignalen in einem Signalübertragungsmedium an die Maschinensteuerung, und/ oder zum Bereitstellen von Steuersignalen für die Pneumatiksteuerung in dem Mehrzweckschnittstellensockel vorhanden. Dabei kann der Mehrzweckschnittstellensockel unterschiedliche Anschlüsse an einer seiner Seiten und/oder Bodenfläche haben. Zum Maschinentisch hin kann in einer weiteren Variante der Mehrzweckschnittstellensockel mit einer Dichtungsanordnung versehen sein. Damit ist der Mehrzweckschnittstellensockel ohne Probleme auf dem Maschinentisch montierbar und kann dort während des Fertigungsbetriebes auch verbleiben. Mit dem Mehrzweckschnittstellensockel ist die Installation des Messgeräts auf einer einem Maschinentisch, einer Palette oder im Arbeitsraum einer CNC-Maschine bei vielen Anwendungen sehr einfach möglich.

Der Mehrzweckschnittstellensockel dient als Vorinstallation an der Werkzeugmaschine und stellt eine einfache Vorbereitungsmöglichkeit für Werkzeugmaschinen dar. Der Mehrzweckschnittstellensockel kann vor der Inbetriebnahme der Werkzeugmaschine bereits komplett montiert und an die Maschinensteuerung angeschlossen in der Werkzeugmaschine installiert sein. Trotz der im Maschinenraum herrschenden sehr rauen Umgebungsbedingungen ist so das Messgerät durch den Anwender einfach einzusetzen und unmittelbar in Betrieb zu nehmen. So ist es möglich, ein Messgerät kundenseitig zu adaptieren, ohne die Dichtheit der Anordnung gefährdet ist, und ohne dass auf die Abdichtung des Maschinentisches geachtet werden muss. Das Messsystem ist durch den Mehrzweckschnittstellensockel vom Anwender schnell und einfach auszutauschen.

In einer weiteren Variante wird das Messgerät durch den Mehrzweckschnittstellensockel über eine Pneumatikleitung versorgt, die auch eine am Messgerät oder dem Mehrzweckschnittstellensockel befindliche Blasdüse zur Werkzeugreinigung im Fall einer Lasermessstrecke direkt über die Schnittstelle versorgt. Somit ist keine zusätzliche externe Leitung erforderlich. Außerdem kann der Mehrzweckschnittstellensockel anstelle der Laser-Messstrecke auch einen taktilen Werkzeugtaster ohne oder mit Blasdüse zur Messflächenreinigung aufnehmen.

Insbesondere bei einer Variante des Messgeräts, bei dem die Lasermessstrecke durch pneumatisch betriebene Verschlusskolben oder Schließblenden gegen Verschmutzen geschützt ist, wird die Ventilentlüftung und/oder Abluft der Verschlusskolben der Blasdüse zur Werkzeugreinigung zugeführt. Damit ist kein zusätzlicher Abluftkanal oder eine zusätzliche Abluftöffnung am Messgerät oder dem Mehrzweckschnittstellensockel notwendig. So wird vorteilhaft vermieden, dass das im durch Nebel, Fluide oder Feststoffe stark belasteten Bearbeitungsraum von Werkzeugmaschinen befindliche Messgerät oder der Mehrzweckschnittstellensockel mit einer Abluftöffnung versehen sein muss. Vielmehr ist das Pneumatik-Steuerungs-System durch ein in der Blasdüse zur Werkzeugreinigung eingebautes Rückschlagventil gegen eindringendes Schmier- oder Kühlmittel wirksam geschützt.

In einer anderen Variante wird eine die elektrische Verbindung aus dem Maschinenraum heraus zur Maschinensteuerung herstellende elektrische Leitung so ausgelegt, dass die Abluft darüber entweichen kann. Dies kann zum Beispiel durch einen in das Kabel eingearbeiteten dünnen Luftschlauch geschehen.

Eine die (i) elektrische und / oder lichtwellenleiter-optische Signalübergabestelle und (ii) Fluidübergabestelle und die (iii) Dichtungsanordnung übergreifende separate Abdeckplatte kann zum Schutz der Schnittstelle vorgesehen sein, wenn kein Messgerät an dem Mehrzweckschnittstellensockel angebracht ist.

Die Pneumatiksteuerung kann zur Versorgung der Fluid-Blas-Einrichtung ein erstes, elektromagnetisch betätigbares Schaltventil aufweisen, das mit elektrischen Betätigungssignalen zu beaufschlagen ist, wobei das erste, elektromagnetisch betätigbare Schaltventil gesteuert Druckluft an einen oder mehrere Luftauslässe der Fluid-Blas-Einrichtung zum Beispiel zur Reinigung eines zu vermessenden Werkzeuges liefern kann. Dieses Schaltventil kann eine elektromagnetisch betätigte Durchlassstellung, in der die Blasluftauslässe mit Druckluft beschickt werden, und eine federbelastete Sperrstellung haben, in der keine Druckluft zu den Blasluftauslässen gelangt.

Die Pneumatiksteuerung kann zum Zuführen von Sperrluft im Bereich des Messstrahls ein mit Betätigungssignalen zu beaufschlagendes, zweites, elektromagnetisch betätigbares Schaltventil aufweisen. Dieses Schaltventil kann gesteuert Druckluft an den Durchtrittsöffnungen des Messstrahls austreten lassen, damit keine Fremdkörper in dem Strahlengang des (Laser-)Lichtstrahls gelangen können. Das zweite, elektromagnetisch betätigbare Schaltventil kann eine federbelastete Sperrstellung, in der keine oder eine mit geringem Druck belastete, oder einem geringeren Volumenstrom bereitgestellte Druckluft an Durchtrittsöffnungen des Messstrahls austreten kann, und eine elektromagnetisch betätigte Durchlassstellung haben, in der Druckluft mit vergleichsweise höherem Druck oder einem vergleichsweise höheren Volumenstrom bereitgestellt an den Durchtrittsöffnungen des Messstrahls austreten kann.

Die Pneumatiksteuerung kann zur Beschickung der zumindest einen Schutz-/Schließeinrichtung mit Fluid ein mit Betätigungssignalen zu beaufschlagendes, drittes, elektromagnetisch betätigbares Schaltventil aufweisen. In der Schutz-/Schließeinrichtung können die Schließblenden oder Verschlusskolben angeordnet sein. Dieses elektromagnetisch betätigbare Schaltventil liefert gesteuert Druckluft an einen oder mehrere Schieber. Dieses Schaltventil kann eine federbelastete Sperrstellung, in der keine Druckluft zu den Schiebern an dem Lichtsenderteil oder dem Lichtempfängerteil der Lichtschrankenanordnung gelangt, so dass kein Mess-Lichtstrahl durchtreten kann, und eine elektromagnetisch betätigte Durchlassstellung haben, in der die Schieber mit Druckluft beschickt werden, so dass der Mess-Lichtstrahl durchtreten kann.

In einer weiteren Variante ist die zumindest eine Schutz-/Schließeinrichtung der Lichtstrecke lösbar mit der Lasermessstrecke verbunden. Dazu ist jeweils ein den pneumatisch betriebenen Verschlusskolben in einem eine Lichtstrahl-Durchlassöffnung enthaltenden Vorsatz angeordnet. Der Vorsatz ist mit einer Dreh-, Schiebe-, oder Rast-Verbindung ausgestattet, die dazu eingerichtet ist, mit einer korrespondierenden Verbindung an der Tragestruktur der Lasermessstrecke zusammenzuwirken. In einer Variante des Vorsatzes sind der pneumatisch betriebene Verschlusskolben und die Lichtstrahl-Durchlassöffnung so angeordnet, dass im montierten Zustand des Vorsatzes und der Lasermessstrecke an dem Mehrzweckschnittstellensockel die Lichtstrahl-Durchlassöffnung einem freien Ende (=oberen Ende) des jeweiligen Schenkels der Tragestruktur der Lasermessstrecke näher ist als dem (=unteren Ende) Mehrzweckschnittstellensockel. Dabei hat in einer Variante des Vorsatzes dieser an seiner dem oberen Ende näheren Seite eine geneigte Wand. Damit vergrößert sich die mögliche Eintauchtiefe eines in einer Spindel der Werkzeugmaschine aufgenommenen Werkzeugs gegenüber einem quaderförmigen Aufbau des Vorsatzes oder gegenüber einer aus im Wesentlichen rechtwinkligen Teilkörpern gebildeten Tragestruktur der Lasermessstrecke mit integrierten Verschlusskolben.

In einer Variante ist der Vorsatz mit einer Dreh-Rast-Verbindung ausgestattet, bei der ein die die Lichtstrahl-Durchlassöffnung umgebender Bund einen ringförmigen, radial nach außen ragenden Kragen mit Unterbrechungen entlang seines Umfangs aufweist. Der Kragen mit seinen Unterbrechungen ist so bemessen, dass er in eine gegengleich geformte Öffnung in dem jeweiligen Schenkel der Tragestruktur der Lasermessstrecke durch Einführen und Verdrehen abdichtend einrasten kann. Die Dreh-Rast-Verbindung des Vorsatzes an der Tragestruktur ist in beide Drehrichtungen lösbar oder verriegelbar. Dies erlaubt die De-/Montage des Vorsatzes an der Tragestruktur der Lasermessstrecke auch nahe einer Störkontur, zum Beispiel einer Wand des Arbeitsraums.

Zwischen dem Verschlusskolben und der Tragestruktur der Lasermessstrecke befindet sich eine Dichtung. Diese Dichtung umgibt einerseits die Lichtstrahl-Durchlassöffnung des Vorsatzes und andererseits radial versetzt zu der Lichtstrahl-Durchlassöffnung einen Pneumatikanschluss für das Betriebsmedium (zum Beispiel Druckluft).

Der Verschlusskolben hat einen Zapfen und ist mit einer Federanordnung belastet, so dass der Zapfen in der Ruhestellung des Verschlusskolbens die Lichtstrahl-Durchlassöffnung des Vorsatzes quer zur Orientierung der Lichtstrahl-Durchlassöffnung verschließt. Durch den Pneumatikanschluss gelangt das Betriebsmedium in eine Arbeitskammer, die den längsverschieblich geführten Verschlusskolben umgibt. Der Verschlusskolben und / oder die Zylinderbohrung ist in einer Variante zum Verschleißschutz mit einer beschichteten / vergüteten Lauffläche versehen. Der Verschlusskolben hat einen die Arbeitskammer zu der Federanordung hin abdichtenden Ringbund. Dazu ist eine Kolbendichtung aus Dichtungsgummi vorgesehen. Damit der Verschlusskolben die Lichtstrahl-Durchlassöffnung des Vorsatzes freigibt, wird die Arbeitskammer mit dem Betriebsmedium beschickt. Dadurch wird der Verschlusskolben gegen die Kraft der Federanordung verschoben, so dass der Zapfen die Lichtstrahl-Durchlassöffnung freigibt. Eine die Federanordnung aufnehmende Federkammer ist geschlossen und damit gegen Verschmutzung geschützt. Der Verschlusskolben hat eine Ventilfunktion, über die die Entlüftung der Federkammer während des Öffnens des Kolbens gesteuert wird. Die Luft entweicht über einen Kanal im Kolben und wird der Sperrluft zugeführt. Dieser Kanal ist in Ruhelage der Verschlusskolben verschlossen und wird nach kurzem Verschiebeweg des Verschlusskolbens freigegeben. Beim Verschließen der Lichtstrahl-Durchlassöffnung mit dem Sperrzapfen des Verschlusskolbens wird über diesen Kanal die Federkammer belüftet, sonst würde ein Unterdruck entstehen.

Die zwischen dem Verschlusskolben und der Tragestruktur der Lasermessstrecke befindliche Dichtung ist in einer Variante als Gummiformteil ausgestaltet und übernimmt die Funktionen eines federnden Elementes zum Toleranzausgleich, die Abdichtung gegen Schmutz und/oder die Abdichtung für die Pneumatikübergabe. Des Weiteren hat in einer weiteren Variante die Dichtung Rastelemente zum Festlegen der Drehposition des Vorsatzes in seiner Gebrauchslage. Durch die Verrastung in der Gebrauchslage ist auch bei schlechter Zugänglichkeit oder Blindmontage des Vorsatzes eine mittig orientierte Montage der Schmutzblende in dem Vorsatz sichergestellt.

Als Variante eines solchen Rastelements ist ein Steg an dem Gummiformteil angeformt, der dazu vorgesehen ist, in eine in die Gehäusefläche der Tragestruktur eingearbeitete Nut oder Hohlkehle einzugreifen. Als weitere Variante eines solchen Rastelements ist ein Metallzylinder vorgesehen, der durch das hier als Andrückfeder dienende Gummiformteil in die Gehäusenut gedrückt. Dies bewirkt eine deutlichere Verrastung als die vorstehend beschriebene Variante. Eine dritte Variante setzt ein separates federndes Rastelement ein. Hier greift ein einzupressendes Kunststoffformteil oder eine Stanz-Biege-Clip oder eine federbelastete Rastkugel in die in der Gehäusefläche der Tragestruktur eingearbeitete Nut oder Hohlkehle ein. Die hier vorgestellte Dichtung hat in einer Variante unterschiedliche Querschnittsformen. Dies bewirkt Bereiche mit unterschiedlichem Anpressdruck. Dadurch kann auch bei der asymmetrischen Fixierung des Vorsatzes durch die Dreh-, Schiebe-, oder Rast-Verbindung ein gleichmäßiges Anliegen an der Gehäusefläche der Tragestruktur realisiert werden.

Erfindungsgemäß hat ein Messsystem zur berührungslosen Messung, mit einem einen Lichtsender und einen Lichtempfänger aufweisenden Lichtschranken-Messsystem eine dem Lichtsender und/oder dem Lichtempfänger zugeordnete optische Linsenanordnung zur Formung und Fokussierung eines Lichtstrahls von dem Lichtsender zu dem Lichtempfänger. Die optische Linsenanordnung ist in einer Linsenfassung aufgenommen. Die Linsenfassung hat eine innere und eine äußere, jeweils zylindrische Hülse, wobei die Linsenanordnung in der inneren Hülse eingesetzt ist, die von der äußeren Hülse zumindest teilweise eingefasst ist. Die Linsenfassung ist mit der Linsenanordnung in einer Wandung des Lichtsenders und/oder des Lichtempfängers aufgenommen.

Diese optische Anordnung erlaubt, ein optisches Feedback -APC- dadurch zu erzielen, dass ein Teil der von dem Lichtstrahler erzeugten Lichtleistung auf ein in den Lichtstrahler integriertes Photoelement strahlt, und dieses Photoelement einen zur erzeugten Leistung proportionalen Strom erzeugt. Dieser zur erzeugten Leistung proportionale Strom wird dafür genutzt, den Vorwärtsstrom durch den Lichtstrahler zu regeln. Alternativ fließt ein konstanter Strom -ACC- durch den Lichtstrahler, indem der Vorwärtsstrom auf einem bestimmten Wert gehalten wird.

Als Lichtstrahler dient eine leistungsgeregelte oder leistungsstabilisierte Laserdiode. Deren Licht wird der optischen Linsenanordnung mit axialem Versatz zugeführt. Diese optische Linsenanordnung hat zum Beispiel eine sphärische oder asphärische Linse aus Glas oder Kunststoff oder einer Kombination beider Materialien. Die optische Linsenanordnung kann auch ein Licht beugendes Element sein. Die optische Linsenanordnung kollimiert, divergiert oder konvergiert das durchstrahlende Licht. Die Ausbreitung des Lichts wird durch eine Blende beschränkt, welche in die optische Linsenanordnung eingefügt oder dieser nachgeordnet sein kann. Durch die Blende wird eine rotationssymmetrische oder teilweise rotationssymmetrische Intensitätsverteilung oder ein rundes Strahlprofil erreicht. Nach dieser Blende wird das Licht durch eine sphärische oder asphärische Linse aus Glas oder Kunststoff oder einer Kombination beider Materialien, oder durch ein Licht beugendes Element kollimiert, divergiert oder auf eine gewünschte Fokusposition fokussiert. Die optische Linsenanordnung kann als singlet, doublet oder triplet ausgelegt sein.

Diese Anordnung bietet in einer Variante eine Montagehülse, die neben der Linsenfixierung auch als Blende für die Begrenzung des Laserstrahls dienen kann. In diese innere Hülse oder Montagehülse können die Linsen kraftfrei oder annähernd kraftfrei eingelegt werden. So legt die innere Hülse die Linsenanordnung geometrisch fest und/oder wirkt als Blende für die Begrenzung des Lichtstrahls. Im Gegensatz zu herkömmlichen Linsenfassungen können mit der hier vorgeschlagenen Lösung die Linsen (auch ohne Klebstoff) spielfrei und sehr zentrisch gefasst werden, wobei wenige zu montierende Teile eine einfache und schnelle Montage durch den Pressvorgang erlauben.

Die innere und/oder die äußere Hülse haben in einer Variante in Längsrichtung verlaufende Schwächungs- und/oder Dehnungszonen. Dabei kann in einer Variante die innere Hülse und/ oder die äußere am Innen- und/oder Außenumfang verteilte, radial nach innen orientierte Pressstellen haben. Dabei sind die Linsen der Linsenanordnung in der inneren Hülse eingelegt. Dabei sind der Innenquerschnitt der äußeren Hülse und der Außenquerschnitt der inneren Hülse so zueinander dimensioniert, dass die äußere Hülse die innere Hülse in radialer Richtung gegen die Linsen drängt. In einer weiteren Variante mit mehreren Linsen kann auch für jede der mehreren Linsen eine eigene innere Hülse vorgesehen sein. Die Anordnung der Linsen zueinander wird in dieser Variante durch die Aufnahme der jeweiligen inneren Hülse in der äußeren Hülse bestimmt.

Die innenliegenden Pressstellen oder -wulste drücken gegen den Linsenaußendurchmesser und bilden durch deren plastische Verformung eine abdichtende Klemmung der Linsenaußenfläche. Diese einfach zu montierende Anordnung kommt gegenüber herkömmlichen Linsenfassungen ohne Schrauben oder Klemmringe aus. Die beiden Hülsen erfordern kein Kleben; es handelt sich um einfache zu fertigende Teile, die Gesamtanordnung benötigt nur eine geringe Teileanzahl.

Die geometrische Gestaltung der inneren Hülse und die Materialauswahl beeinflussen die auf die Linsen wirkenden Kräfte. Dabei werden Spannungen in den Glaskörper eingeleitet, die ausreichend hoch sind, um eine zuverlässige Fixierung und ggf. Abdichtung zu erreichen ohne zu Abplatzungen an den Linsen oder zu optischen Verzeichnungen zu führen.

Um die Fertigungstoleranzen der einzelnen Bauteile ausgleichen zu können und bei vielfältigsten Toleranzkonstellationen die Presskräfte gegen die Linsen und gegen die äußere Hülse im gewünschten Bereich zu halten, ist ein Material zu wählen, welches sich bei der Montage plastisch verformt und dabei trotzdem noch genügend Restspannung aufrecht erhält.

Die äußere Hülse kann an einem Ende wenigstens eine Einführfase, vorzugsweise mit einem Fasenwinkel von 2° - 15°, besonders bevorzugt mit einem Fasenwinkel von 4° - 10° aufweisen. Die innere Hülse (Montagehülse) verengt sich bei einem Darüber-Schieben oder Aufpressen der äußeren Hülse, die auch als Gehäuse für die gesamte optische Anordnung dienen kann. Diese ,sanft geneigten' Einführfasen erleichtern das Darüber-Schieben der Hülse über die Linsen. Dadurch werden die Linsen von außen geklemmt.

Die innere und/oder die äußere Hülse kann aus Material unterschiedlicher Festigkeit oder Duktilität mit abweichenden Anteilen plastischer und elastischer Verformbarkeit wie Aluminium, Kunststoff, Buntmetall, Blei, Formgedächtnislegierung, jeweils in unterschiedlichen Härtegraden gebildet sein. Sowohl die innere(n) als auch die äußere Hülse kann zur Dimensionierung und zur Verlaufsmodellierung der Festigkeit, Elastizität und Verformbarkeit mit Schwächungsstellen (Vertiefungen, Ausnehmungen, Schlitze, Öffnungen, oder dergl.) versehen sein. Zwischen den Linsen und der inneren Hülse und/oder der inneren und der äußeren Hülse, oder zwischen der Linse und der äußeren Hülse kann ein zusätzlich eingelegtes Dichtelement aus Gummi oder Kunststoff oder ein Klebstoff eingesetzt sein. Eine Abdichtung zur Linse und zur Außenhülse entsteht durch die Presskräfte der Montagehülse. Ein zusätzlich eingelegtes Dichtelement aus Gummi oder Kunststoffformteil kann hier eine zusätzliche Abdichtung bieten. Schließlich kann zur spielfreien Verpressung anstelle des Dichtelementes ein etwaiger Spalt zwischen der äußeren Hülse und der Linsenanordnung mit einem Kleber aufgefüllt sein. Zusätzlich zur spielfreien Verpressung können die verbleibenden Spalte zur Festigkeitssteigerung und als zusätzliche Abdichtung mit einem Klebstoff aufgefüllt sein.

Die hier vorgestellte Lösung der dem Lichtsender und/oder dem Lichtempfänger zugeordneten optischen Linsenanordnung in der Linsenfassung erlaubt eine präzise, schnelle und prozesssichere Linsenmontage. Dabei kann die mechanische Fixierung der optischen Linsenanordnung in der Linsenfassung und die Abdichtung in einem Arbeitsgang erreicht werden. Insgesamt wird hierdurch eine stabile, spielfreie Montage der optischen Komponenten erreicht, wobei die fertig montierte Anordnung unempfindlich gegen Erschütterungen ist. Die erforderliche geringe Teileanzahl resultiert aus einem Verzicht auf Distanzringe oder eingeschraubte Klemmringe, oder dergleichen.

Weitere Merkmale, Eigenschaften, Vorteile und mögliche Abwandlungen dieses Messsystems werden anhand der nachstehenden Beschreibung erläutert, in der auf die beigefügten Zeichnungen Bezug genommen ist.

### Kurzbeschreibung der Zeichnungen

Fig. 1 zeigt ein Messgerät in Gestalt einer berührungslos messenden Lichtschranke in einer schematischen, seitlichen Darstellung.
Fig. 2 zeigt einen Mehrzweckschnittstellensockel zum Messgerät aus Fig. 1 in einer schematischen Draufsicht-Darstellung.
Fig. 3 zeigt den Mehrzweckschnittstellensockel aus Fig. 2 in einer schematischen, SeitenDarstellung.
Fig. 4a zeigt eine erste Variante einer elektrischen Signalübergabestelle des Mehrzweckschnittstellensockels aus Fig. 2 in einer schematischen, seitlichen Schnitt-Darstellung.
Fig. 4b zeigt diverse Varianten von SMT-Federkontakten in schematischer perspektivischer Darstellung für die zweite Variante aus Fig. 4a.
Fig. 4c zeigt eine zweite Variante einer elektrischen Signalübergabestelle des Mehrzweckschnittstellensockels aus Fig. 2 in einer schematischen, seitlichen Schnitt-Darstellung.
Fig. 4d zeigt eine dritte Variante einer elektrischen Signalübergabestelle des Mehrzweckschnittstellensockels aus Fig. 2 in einer schematischen, seitlichen Schnitt-Darstellung.
Fig. 4e zeigt eine vierte Variante einer elektrischen Signalübergabestelle des Mehrzweckschnittstellensockels aus Fig. 2 in einer schematischen, seitlichen Schnitt-Darstellung.
Fig. 5 zeigt einen Vorsatz mit einem pneumatisch betriebenen Verschlusskolben für das Messgerät in seiner Schließstellung in einer schematischen, seitlichen Schnitt-Darstellung.
Fig. 6 zeigt den Vorsatz mit dem pneumatisch betriebenen Verschlusskolben für das Messgeräts in seiner Durchlassstellung in einer schematischen, seitlichen Schnitt-Darstellung.
Fig. 7 zeigt den Vorsatz aus Fig. 5 in einer schematischen Draufsicht-Darstellung. Die Fig. 5 und 6 sind Schnittansichten durch den Vorsatz der Fig. 7 längs der Linie A-A in der Fig. 7.
Fig. 8 veranschaulicht eine Variante eines Rastelements für den Vorsatz an dem Tragelement.
Fig. 9 veranschaulicht eine erste Variante einer Linsenfassung in einem Schenkel einer Tragestruktur.
Fig. 10 veranschaulicht eine zweite Variante einer Linsenfassung.

### Detaillierte Beschreibung des Messsystems

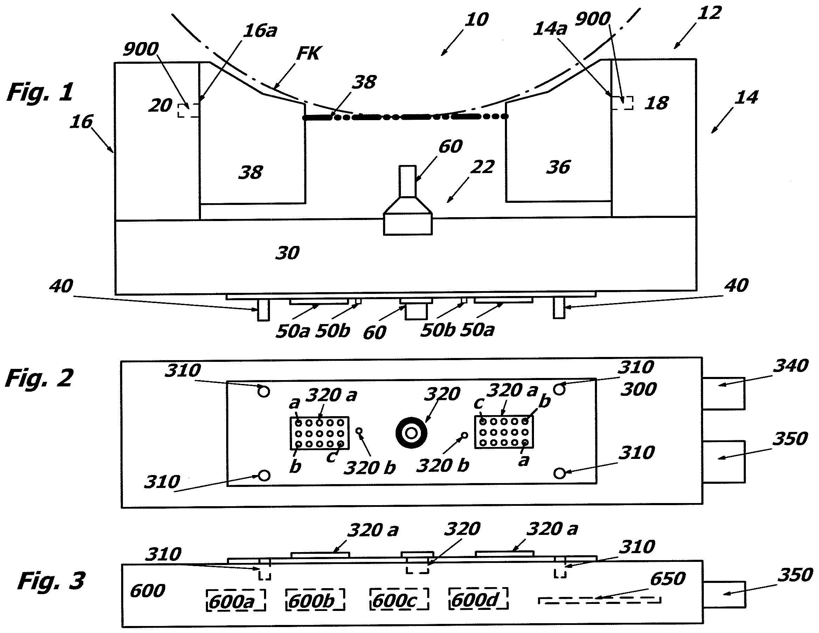

Fig. 1 zeigt ein Messgerät 10 für berührungslose Messung an stehenden und rotierenden Werkzeugen in einer Werkzeugmaschine. Bei der Werkzeugmaschine kann es sich zum Beispiel um eine Fräs-Drehmaschine oder um eine Dreh-Fräsmaschine handeln, in der Werkzeuge zur Span abhebenden oder zur Material abtragenden Bearbeitung eingespannt sind. Stehende Werkzeuge sind dabei zum Beispiel Wendeschneidplatten zur Drehbearbeitung und rotierende Werkzeuge sind dabei zum Beispiel Bohrer oder Fräser.

Um beide Arten von Werkzeugen mit hoher Präzision (zum Beispiel etwa 1 µm oder höher) zu vermessen, ist das Messgerät 10 mit einer Lichtschrankenanordnung 12 zur Positionsbestimmung eines (nicht gezeigten) Werkzeuges oder zur Bestimmung der längsten Schneide eines (nicht gezeigten) rotierenden Werkzeuges in der Werkzeugmaschine ausgestattet.

Bei einem taktil messenden Messgerät wird zu unterschiedlichen Messaufgaben das Werkzeug durch die Werkzeugmaschine an einen Taststift des Messgeräts herangefahren oder von diesem weg verfahren. Nachstehend wird eine Lichtschrankenanordnung 12 und deren Aspekte ausführlich erläutert. Eine Reihe der Anspekte, die sich nicht auf die Besonderheiten einer Lichtstrecke beziehen, gelten jedoch auch bei taktil messenden Messgeräten.

Die Lichtschrankenanordnung 12 ist dabei in dem Messgerät (Lichtschranken-Messsystem) 10 in einen Lichtsenderteil 14 und einen Lichtempfängerteil 16 aufgeteilt, die jeweils einem Schenkel 18, 20 einer im Wesentlichen U-förmigen Tragestruktur 22 des Messgeräts 10 zugeordnet sind. Wie in Fig. 1 gezeigt ist, befinden sich der Lichtsenderteil 14 und der Lichtempfängerteil 16 jeweils in einem Schenkel 18, 20 der U-förmigen Tragestruktur 22. Der Lichtsenderteil 14 und der Lichtempfängerteil 16 sind einander zugewandt und durch eine jeweilige Durchtrittsöffnung 14a, 16a (in Fig. 1 nicht sichtbar dargestellt) gelangt ein Lichtstrahl 24, der im vorliegenden Beispiel ein Laserstrahl ist, vom Lichtsenderteil 14 zu dem Lichtempfängerteil 16. Die im Wesentlichen U-förmige Tragestruktur 22 des Messgeräts 10 ist aus mehreren quaderförmigen Abschnitten zusammengefügt.

Zur Positionsbestimmung eines Werkzeuges oder zur Bestimmung der längsten Schneide eines rotierenden Werkzeuges in der Werkzeugmaschine wird nach einer (von mehreren) Messvorschrift das drehantreibbare Werkzeug so in dem Laserlicht-Messstrahl 24 der Lichtschrankenanordnung 12 positioniert, dass dessen Strahlengang durch das Werkzeug unterbrochen wird. Anschließend wird das Werkzeug relativ zu dem Messstrahl 24 mit einer möglichst konstanten Geschwindigkeit von diesem weg bewegt. Dabei wird das Werkzeug zu einer Position bewegt, in welcher der Messstrahl 24 von dem Werkzeug nicht mehr unterbrochen wird. Alternativ dazu kann die Messung auch drückend erfolgen; hierbei befindet sich das rotierende Werkzeug außerhalb des Messstrahls 24 und erzeugt ein Messsignal, sobald der Messstrahl 24 abgeschattet ist.

Im Innern des Gehäuses des Lichtempfängerteils 16 ist eine - nicht weiter veranschaulichte - Signalelektronikschaltung zur Signalformung und Signalweiterleitung an eine Maschinensteuerung der Werkzeugmaschine aufgenommen. Die Signalelektronikschaltung dient dazu, Messsignale von der Lichtschrankenanordnung 12 zu empfangen und an die - nicht weiter veranschaulichte - Maschinensteuerung weiter zu leiten.

In einem Verbindungsblock 30 zwischen den beiden Schenkeln 18, 20 der U-förmigen Tragestruktur 22 sind pneumatische Verbindungen zu den mit Druckluft zu versorgenden Komponenten des Messsystems 10 ausgebildet.

Um mit der Maschinensteuerung der Werkzeugmaschine zu kommunizieren, also auf Anforderung von der Maschinensteuerung Messsignale von der Lichtschrankenanordnung 12 an die Maschinensteuerung zu senden und für die Messung das Messsystem elektrisch und pneumatisch zu steuern, ist ein Mehrzweckschnittstellensockel 300 vorgesehen, der in Fig. 2 veranschaulicht ist.

Dieser Mehrzweckschnittstellensockel 300 hat einen mit einem Gegenanschlag an dem Messgerät 10 korrespondierenden mechanischen Anschlag 310 zur Aufnahme und wiederholgenauen Platzierung des Messgeräts an dem Mehrzweckschnittstellensockel 300. In dieser Variante ist der Anschlag 310 durch an seiner Oberseite vier rechtwinklig zueinander angeordnete Aufnahmen 310 für am Boden des Messgeräts 10 befindliche Zapfen 40 gebildet.

Dieser Mehrzweckschnittstellensockel 300 hat zwei mit ersten Signalübergabestellen 50a, 50b an dem Lichtschranken-Messsystem korrespondierende zweite Signalübergabestellen 320a, 320b. Dabei sind die Signalübergabestellen 50a, 320a elektrische Kontakte und die Signalübergabestellen 50b, 320b Lichtwellenleiter-Kontakte.

Des Weiteren hat dieser Mehrzweckschnittstellensockel 300 eine mit einer ersten Fluidübergabestelle 56 an dem Lichtschranken-Messsystem korrespondierende zweite Fluidübergabestelle 330 an dem Mehrzweckschnittstellensockel 300.

So bildet dieser Mehrzweckschnittstellensockel 300 eine mechanische, eine elektrisch/optische Signal-, und/ oder pneumatische Fluid-Verbindung zwischen der Maschinensteuerung der Werkzeugmaschine und dem Messsystem. Neben der vorstehend beschriebenen Variante kann die mechanische Schnittstelle zum Beispiel auch als Schraub-, Rast-, Dreh- oder Klemmfixierung, als Schwalbenschwanz- oder Bajonettverbindung gestaltet sein. Diese Schnittstelle bietet eine mechanisch wiederholgenaue Messgeräteplatzierung.

Die Zapfen 40 können in anderen Varianten auch als vorgespannte Stifte, Passstifte oder Spannstifte ausgestaltet sein. So sind sie in der Lage, kleinere Toleranzen zwischen dem Mehrzweckschnittstellensockel und dem Lichtschranken-Messsystem ausgleichen. In weiteren Varianten kann der Mehrzweckschnittstellensockel 300 auch eine oder mehrere oberflächenvergütete Anlageflächen haben, die mit formkorrespondierenden Gegenflächen an dem Messsystem zusammenwirken.

Der mechanische Anschlag ist hier durch seine punktsymmetrische Anordnung der einzelnen Übergabestellen in Bezug auf ein Zentrum (hier ein zentraler Pneumatikanschluss) so gestaltet, dass das Messgerät 10 in zwei unterschiedlichen, um 180° gedrehten Orientierungen mit dem Mehrzweckschnittstellensockel 300 zu verbinden ist.

Bei dem Mehrzweckschnittstellensockel 300 hat in der in den Fig. 2 und 3 gezeigten Variante die zweite Signalübergabestelle eine erste und eine zweite Kontaktstelle 320a mit jeweils mehreren Kontakten a, b, c. Diese Kontakte a, b, c sind elektrische (ohmsche) Kontakte. Darüber hinaus sind - optional - zwei Signalübergabestellen 50b, 320b als Lichtwellenleiter-Kontakte ausgestaltet. Die erste und die zweite Kontaktstelle 320a sind voneinander beabstandet, und die mehreren Kontakte a, b, c der einen Kontaktstelle 320a sind bezogen auf eine Mitte (hier im Zentrum der zweiten Fluidübergabestelle 330) zwischen den beiden Kontaktstellen punktsymmetrisch zu den mehreren Kontakten a, b, c der anderen Kontaktstelle 320a angeordnet.

Das Lichtschranken-Messsystem 10 hat gegengleiche erste und eine zweite Kontaktstellen 50a, 50b. Damit ist das Verbinden des Lichtschranken-Messsystems 10 mit dem Mehrzweckschnittstellensockel 300 in zwei unterschiedlichen, um 180° gedrehten Orientierungen möglich. Dazu werden die Zapfen 40 des Messsystems 10 in die Aufnahmen 310 eingesetzt, so dass die erste und zweite Kontaktstellen 50a, 50b des Messsystems 10 mit den ersten und zweiten Kontaktstellen 320a, 320b des Mehrzweckschnittstellensockels 300 elektrisch bzw. optisch kontaktieren. In einer Ausführung bildet eine Leiterplatte PCB am Messgerät 10 bzw. am Mehrzweckschnittstellensockel 300 jeweils die abdichtende Ebene. Die ersten und zweiten Kontaktstellen 50a, 50b des Messgeräts 10 bzw. des Mehrzweckschnittstellensockels 300 sind auf dieser Leiterplatte PCB aufgelötet. Ein mechanischer Rahmen aus Hartkunststoff 414 fasst die Kontakte ein. Die Leiterplatte PCB hat nicht weiter veranschaulichte Kupferbahnen, mit denen die zusammengehörenden Kontakte der Kontaktstellen zusammengeführt und die elektrischen Signale/Versorgungsspannungen weitergeleitet werden. Die Leiterplatte PCB und eine Trägerplatte oder ein Gehäuseteil 416 wirken zur Abdichtung des Messgeräts 10 bzw. des Mehrzweckschnittstellensockels 300. Diese Lösung ist auch mit Standard-Federkontaktstiften oder solchen Mehrfachblöcken realisierbar.

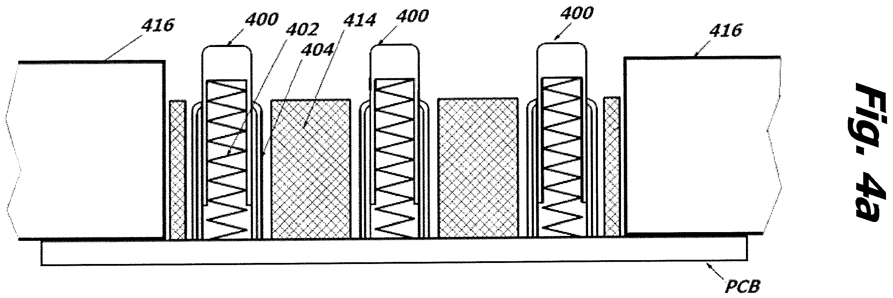

Fig. 4a veranschaulicht eine Variante der elektrischen Kontaktstellen. Diese elektrischen Kontaktstellen sind gebildet durch mehrere rohrförmige Kontaktstifte 400, die durch eine Druckfeder 402 vorgespannt in einer Hülse 404 aufgenommen sind. Jeder Kontaktstift 400 hat an seinem freien Ende ein Kontaktstück. Die einzelnen elektrischen Kontaktstifte sind durch ein diese einfassendes Kunststoffformteil 414 voneinander beabstandet und in ihrer Position durch die gedruckte Leiterplatte PCB in dem Gehäuse 416 fixiert.

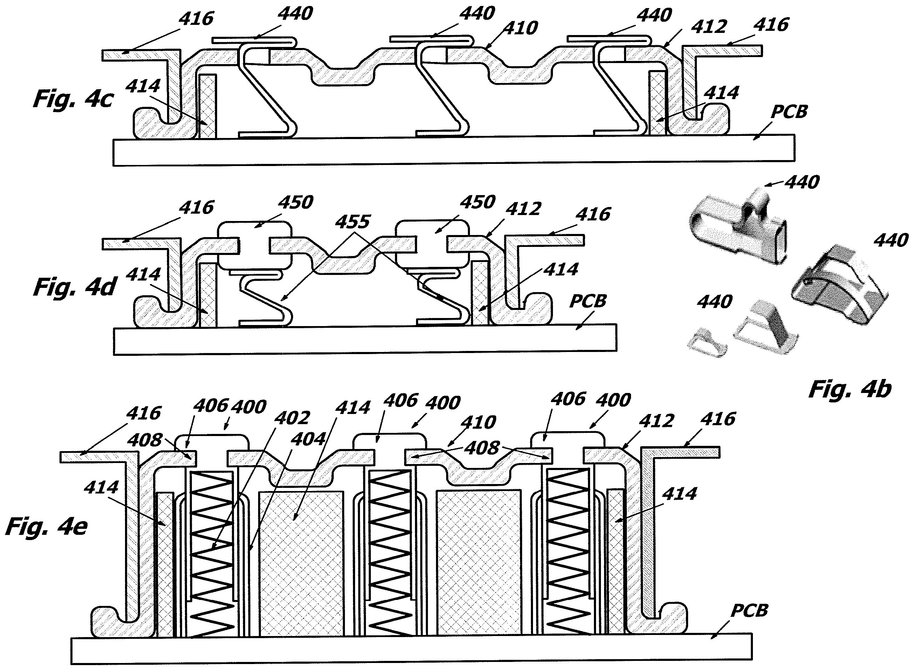

Fig. 4b zeigt unterschiedliche Varianten von SMT-bestückten Kontaktfedern, die anstelle der durch die Druckfeder 402 vorgespannten rohrförmige Kontaktstifte 400 eingesetzt werden können.

Anstatt dieses vorstehend erläuterten Kontaktfelds zeigt Fig. 4c eine abgedichtete Variante auf Basis von SMT-bestückten in der Seitenansicht etwa z-förmigen Kontaktfedern. Fig. 4d zeigt in das Gummiformteil 410 eingesetzte Kontaktpads 450, die als durchgenietete Kontakte realisiert sind und in dieser Variante über in der Seitenansicht etwa z-förmige Kontaktfedern 455 mit nicht weiter veranschaulichten Kupferbahnen auf der Leiterplatte PCB kontaktieren. Die elektrischen Kontaktstellen sind durch ein Kunststoffformteil 414 eingefasst. Wegen des abdeckenden Gummiformteils 410 lassen sich die elektrischen Kontaktstellen leicht mit Druckluft abblasen. So kann sichergestellt werden, dass sich bei der Montage des Messgeräts 10 auf dem Mehrzweckschnittstellensockel 400 keine Metallspäne, Kühlmitteltropfen, oder dergl. an den Kontaktstellen befinden und den mechanischen Anschlag, die elektrischen Kontaktstellen oder die Fluidübergabestelle beeinträchtigen.

Fig. 4e veranschaulicht eine weitere Variante der elektrischen Kontaktstellen. In dieser Variante sind mehrere Kontaktstifte 400, die durch eine Druckfeder 402 vorgespannt in einer Hülse 404 aufgenommen. Jeder Kontaktstift 400 hat ein pilzförmiges Kontaktstück 406, das eine Einschnürung 408 - ähnlich zu den Kontaktpads 450 der Fig. 4d - aufweist. In dieser Einschnürung 408 ist ein abdeckendes Gummiformteil 410 unter Spannung aufgenommen, das auch die Einschnürungen 408 der anderen Kontaktstifte 400 einfasst. An seinem äußeren Rand 412 ist das Gummiformteil 410 nach unten gebogen. Die elektrischen Kontaktstellen sind so nach außen abgedichtet, so dass nur die pilzförmigen Kontaktstücke 406 freiliegen. Die einzelnen elektrischen Kontaktstellen sind durch ein diese einfassendes Kunststoffformteil 414 voneinander beabstandet und in ihrer Position fixiert. Wegen des abdeckenden Gummiformteils 410 lassen sich die elektrischen Kontaktstellen leicht mit Druckluft abblasen. So befinden sich bei der Montage des Messgeräts 10 auf dem Mehrzweckschnittstellensockel 400 keine störenden Metallspäne, Kühlmitteltropfen, oder dergl. an den Kontaktstellen befinden oder dem mechanischen Anschlag.

Der Mehrzweckschnittstellensockel 300 oder die Tragstruktur 22 des Messsystems 10 hat in einer Variante eine Pneumatiksteuerung 600, umfassend Pneumatikkomponenten wie Ventile 600a, Drosseln oder Druckminderer 600b, Rückschlagventile 600c, Filterkapsel 600d, oder dergl., zum Bereitstellen von unter Druck stehendem Fluid für verschiedene Funktionen in der Lichtschrankenanordnung. Sofern der Mehrzweckschnittstellensockel 300 die Pneumatiksteuerung 600 beinhaltet, ist für jede der pneumatischen Funktionen eine Fluidübergabestelle vorzusehen.

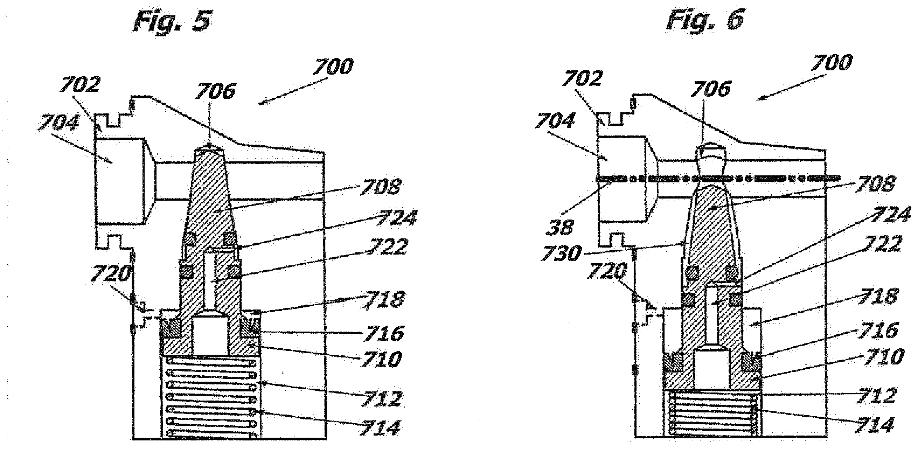

Eine dieser Funktionen ist zum Beispiel eine pneumatisch zu betätigende Schließblende für den Messstrahl 24 in der Lichtschrankenanordnung. Diese Schließblende - für die Details siehe weiter unten die Beschreibung der Fig. 5, 6 - ist jeweils einmal in einem Vorsatz 36, 38 an den beiden Schenkeln 18, 20 der U-förmigen Tragestruktur 22 des Messsystems 10 angebracht (siehe Fig. 1). Eine weitere dieser pneumatischen Funktionen ist eine Fluid-Blas-Einrichtung mit einer Blasdüse 60 (siehe Fig. 1) um gereinigte Druckluft mit etwa 2 bis 10 bar aus der Fluid-Blas-Einrichtung zur Reinigung eines zu vermessenden Werkzeuges und zur Reinigung der Tastfläche einer Messtasteranordnung (im Fall eines Taktil-Messgeräts) zu einem Messort an dem Tastelement und/oder im Bereich des Messstrahls (im Fall eines berührungslos messenden Messgeräts) zuzuführen. Eine weitere pneumatische Funktion ist eine in dem Lichtsenderteil und/ oder dem Lichtempfängerteil der Lichtschrankenanordnung befindliche Luftsperre.

Der Mehrzweckschnittstellensockel 300 hat neben der Pneumatiksteuerung 600 eine elektronische Steuerung 650 zum Bereitstellen von Steuersignalen für den Betrieb der Lichtschrankenanordnung, zum Empfangen von Messsignalen von der Lichtschrankenanordnung, zum Abgeben von Messsignalen in einem Signalübertragungsmedium an die Maschinensteuerung, und/ oder zum Bereitstellen von Steuersignalen für die Pneumatiksteuerung in dem Mehrzweckschnittstellensockel vorhanden. Dabei hat der Mehrzweckschnittstellensockel 300 einen elektrischen Anschluss 340 und einen pneumatischen Anschluss 350. In einer weiteren Variante ist die Laserelektronik im Lasersystem 22 untergebracht. Die elektrische Ansteuerung der pneumatischen Ventile ist im Mehrzweckschnittstellensockel 300 untergebracht. Die elektrische Ansteuerung der pneumatischen Ventile kann auch im Laser-Messsystem 10 untergebracht sein.

In der in Fig. 1 - 3 veranschaulichten Variante wird das Messsystem 10 durch den Mehrzweckschnittstellensockel 300 über Pneumatikleitungen 330, 330a, 330b versorgt, von denen eine auch eine am Messsystem 10 befindliche Blasdüse 60 zur Werkzeugreinigung mit Druckluft über den Mehrzweckschnittstellensockel 300versorgt. In der in Fig. 3 veranschaulichten Variante sind die pneumatischen Ventile im Mehrzweckschnittstellensockel 300 untergebracht. In diesem Fall sind die drei pneumatischen Übergabestellen 330, 330a, 330b ebenfalls um 180° wendbar ausgestaltet.

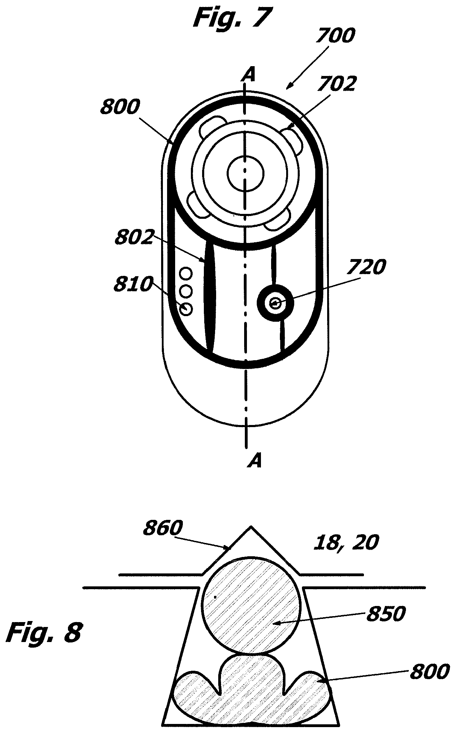

In den Fig. 5 - 7 ist eine Variante von pneumatischen Verschlusskolben oder Schließblenden 700 für das Messsystems veranschaulicht, mit denen die Lasermessstrecke gegen Verschmutzen geschützt ist. In jedem der Vorsätze 36, 38 ist ein solcher Verschlusskolben angeordnet. Dabei zeigt Fig. 5 den Verschlusskolben 700 in seiner Schließstellung und Fig. 6 den Verschlusskolben 700 in seiner Durchlassstellung. Die Fig. 5 und 6 sind Schnittansichten durch den Vorsatz der Fig. 7 längs der Linie A-A in der Fig. 7.

Herkömmliche Schmutzblenden bei derartigen Lasersystemen sind einfach angeschraubt. Abhängig von der Intensität der in der Anwendung vorherrschenden Schmutzbelastung und der Reinheit der Sperrluft, müssen die Schmutzblenden abgenommen und die Strahlaus- / eintrittsstellen gereinigt werden. Dies ist zeitintensiv und erfordert Werkzeug. Die hier vorgestellten Verschlusskolben / Schließblenden 700 mit Dreh- Schiebe- Bajonett etc. Verbindung am Messystem 10 können werkzeuglos abgenommen und montiert werden.

Diese Schließblenden 700 verhindern, dass während längerer Stillstandszeiten des Messsystems Staub, Späne, Bohrflüssigkeit, oder dergl. in die Durchgangsöffnungen des Messstrahls eindringen könnten. Jeder der Vorsätze 36, 38 hat eine im und gegen den Uhrzeigersinn verrastbare Bajonettkupplung 702, um den jeweiligen Vorsatz 36, 38 an dem entsprechenden Schenkel 18, 20 zu montieren. Diese Bajonettkupplung 702 umgibt eine Durchgangsöffnung 704, durch die der Laserstrahl aus- bzw. eintreten kann. Über diese Durchgangsöffnung wird auch die Sperrluft geführt. Die Durchgangsöffnung 704 hat quer zu ihrer Längserstreckung einen Sperrkanal 706, in dem ein konischer Sperrzapfen 708 längsverschieblich aufgenommen ist. Der Sperrzapfen 708 hat an seinem unteren Ende einen Ringbund 710, gegen den von unten eine in einer nach außen abgeschlossenen Federkammer 712 befindliche Druckfeder 714 wirkt um den Sperrzapfen 708 in seine Schließstellung zu drängen (Fig. 5). Auf seiner Oberseite trägt der Ringbund 710 einen Dichtring 716, der eine Druckkammer 718 begrenzt. Diese Druckkammer 718 hat einen Fluidkanal 720, der mit einem entsprechenden Anschluss an dem entsprechenden Schenkel 18, 20 kommuniziert um aus dem Mehrzweckschnittstellensockel 300 gesteuert Druckluft in die Druckkammer 718 einzuleiten oder aus ihr abzulassen.

Der Sperrzapfen 708 hat einen Zentralkanal 722, der von der Federkammer 712 zu einem seitlichen Auslass 724 reicht. Wenn die Druckluft in der Druckkammer 718 den Sperrzapfen 708 aus seiner Schließstellung in seine Durchlassstellung drängt, würde die Luft in der Federkammer 712 komprimiert. Dies wäre nachteilig. Eine nach außen offene Federkammer 712 birgt die Gefahr, dass Späne, Staub, oder dergl. eindringen. Deshalb wird die Federkammer 712 durch den Sperrzapfen 708 in die Durchgangsöffnung 704 belüftet, wenn der Sperrzapfen 708 seine Schließstellung verlässt. Nach etwa 1 mm Weg verlässt die obere Dichtung den zylindrischen Abschnitt des Sperrkanals 706. Dabei entsteht um den Sperrzapfen 708 ein Ringspalt 730 in dem Sperrkanal 706, so dass die Luft aus der Federkammer 712 in die Durchgangsöffnung 704 entweichen kann. Diese Durchgangsöffnung 704 wird bei geöffneter Schließblende 700 aus dem entsprechenden Schenkel 18, 20 mit Druckluft gespeist, die durch die Durchgangsöffnung 704 entweichen kann und ebenfalls das Eindringen von Spänen, Staub, oder dergl. verhindert. So sind auch die Durchgangsöffnungen 704 des Messstrahls in der Sperrstellung abgeschottet, und in der Durchlassstellung, in der die Schutz-/Schließeinrichtungen an dem Lichtsenderteil oder dem Lichtempfängerteil der Lichtschrankenanordnung mit Druckluft beschickt werden, offen, so dass der Messstrahl an seinen Durchtrittsöffnungen aus/eintreten kann, ohne dass störende Substanzen eindringen können. In einer weiteren Variante ist die Ventilstelle dadurch gebildet, dass ein kurzes zylindrisches Ende des Sperrzapfen 708 mit einem innen liegendem Entlüftungskanal in Ruhelage in einer Dichtung steckt. Nach einem kurzem Weg des Sperrzapfens 708 kommt der Entlüftungskanal aus seiner Ruhelage von der Dichtung frei, so dass die Luft aus der Federkammer 712 in die Durchgangsöffnung 704 entweichen kann. Diese Durchgangsöffnung 704 wird bei geöffneter Schließblende 700 aus dem entsprechenden Schenkel 18, 20 ebenfalls mit Druckluft gespeist, die durch die Durchgangsöffnung 704 entweichen kann und ebenfalls das Eindringen von Spänen, Staub, oder dergl. verhindert.

Zwischen jedem Vorsatz 36, 38 mit dem Verschlusskolben 700 und der an den beiden Schenkeln 18, 20 der U-förmigen Tragestruktur 22 des Messsystems 10 befindet sich eine Dichtung 800. Diese Dichtung 800 umgibt einerseits die Lichtstrahl- und Sperrluft-Durchlassöffnung 704 des Vorsatzes 36, 38 und andererseits radial versetzt zu der Lichtstrahl-Durchlassöffnung 704 den Fluidkanal 720, der mit dem entsprechenden Pneumatikanschluss für die Druckluft kommuniziert. Des Weiteren fasst sie Lichtleiter 810 zur Anzeige von Betriebszuständen des Messsystems 10 ein.

Die Dichtung 800 ist als Gummiformteil ausgestaltet und dient zum Toleranzausgleich, zur Abdichtung gegen Schmutz und zur Abdichtung für die Pneumatikübergabe. Der Toleranzausgleich bezieht sich hier auf unterschiedliche Varianten der Schmutzblendenfixierung, da einige Ausgestaltungen (zum Beispiel Bajonett oder Schwalbenschwanz) ein federndes Element benötigen. Ein Dichtungsabschnitt 802 der Dichtung 800 dient als Rastelement zum Festlegen der Drehposition des Vorsatzes in seiner Gebrauchslage. Dieser Dichtungsabschnitt 802 greift beim Verdrehen des Vorsatzes um die Lichtstrahl-Durchlassöffnung 704 mit dem Bajonettverschlss zu Verrasten in eine - nicht weiter veranschaulichte gegengleich - geformte Nut an den beiden Schenkeln 18, 20 der U-förmigen Tragestruktur 22 ein und legt so die Position des Vorsatzes am jeweiligen Schenkel 18, 20 fest. Durch dieses Eingreifen des Dichtungssteges in die Nut in der Gebrauchslage ist eine korrekte Montage der Schmutzblende in dem Vorsatz sichergestellt.

In Fig. 8 ist als weitere Variante eines solchen Rastelements ein Metallzylinder 850 vorgesehen, der durch das hier als Andrückfeder wirkende Gummiformteil 800 in die Nut 860 an den beiden Schenkeln 18, 20 der U-förmigen Tragestruktur 22 gedrückt wird. Dies bewirkt eine deutlichere Verrastung als die vorstehend beschriebene Variante.

Die hier vorgestellte Dichtung hat in einer Variante unterschiedliche Querschnittsformen. Dies bewirkt Bereiche mit unterschiedlichem Anpressdruck. Dadurch kann auch bei der asymmetrischen Fixierung des Vorsatzes durch die Dreh-, Schiebe-, oder Rast-Verbindung ein gleichmäßiges Anliegen an der Gehäusefläche der Tragestruktur realisiert werden.

Wie in Fig. 1 und in den Fig. 5 - 7 gezeigt, ist die Lichtstrahl-Durchlassöffnung in dem Vorsatz so angeordnet, dass im montierten Zustand des Vorsatzes an der Lasermessstrecke die Lichtstrahl-Durchlassöffnung an einem freien, oberen Ende des jeweiligen Schenkels der Tragestruktur 22 der Lasermessstrecke 10 näher ist als dem unteren Ende nahe des Mehrzweckschnittstellensockels 300 Der Vorsatz hat an seiner dem oberen Ende näheren Seite eine geneigte Kontur oder Wand 780. Wie in den Fig. 5 und 6 veranschaulicht, verjüngt die geneigte obere Wand durch ihre geknickt verlaufende Kontur den Vorsatz in der Weise, dass ein Werkzeug mit dem in Fig. 1 strichpunktiert angedeuteten Flugkreis FK den Laserstrahl 38 gut erreichen kann.

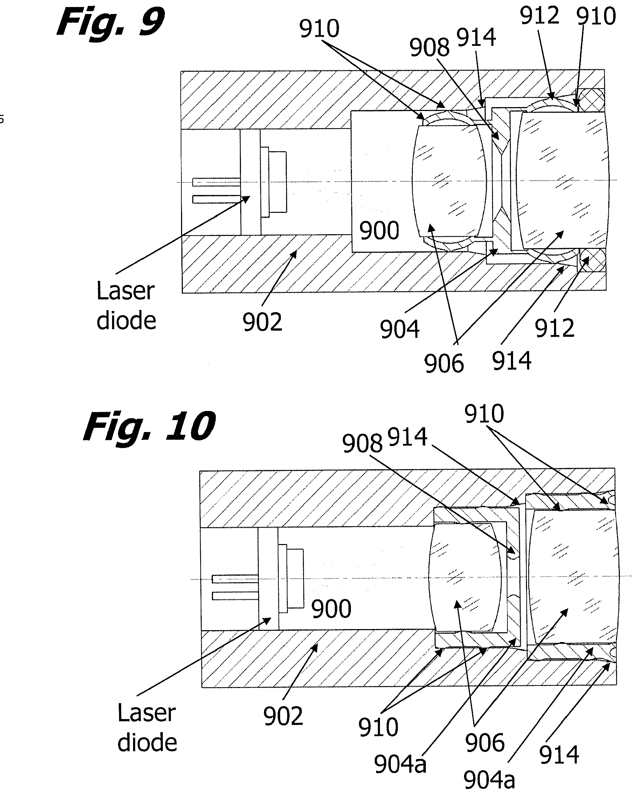

Das Messsystem hat einen nicht weiter veranschaulichten Lichtsender und einen Lichtempfänger in dem Lichtschranken-Messsystem. Dabei ist dem Lichtsender eine optische Linsenanordnung zur Formung und Fokussierung des (Laser-)Lichtstrahls von dem Lichtsender zu dem Lichtempfänger zugeordnet. Der Lichtempfänger ist hier ohne optische Linsenanordnung ausgestaltet; er hat lediglich ein Schutzglas und eine Lochblende. In Fig. 9 ist eine von mehreren Varianten gezeigt, wie die optische Linsenanordnung in einer Linsenfassung 900 aufgenommen ist. Die Linsenfassung 900 hat eine äußere zylindrische Hülse 902 und eine innere zylindrische Hülse 904. Die Linsenanordnung 906 ist in der inneren Hülse 904 eingesetzt, die von der äußeren 902 Hülse eingefasst ist. Die Linsenfassung 900 mit der Linsenanordnung ist in einer Wandung des Lichtsenders aufgenommen. Im Lichtempfänger ist anstelle der Linsen eine optisch nicht wirksame Schutzscheibe eingesetzt. Die innere Hülse 904 legt die Linsenanordnung 906 geometrisch fest. Sie hat auch eine Blende 908 für die Begrenzung des Lichtstrahls.

Bei der in Fig. 9 veranschaulichten Variante ist die äußere Hülse 902 relativ zur inneren Hülse 904 starr und formbeständig, während die innere Hülse 904 elastisch oder plastisch verformt wird, wenn sie in die äußere Hülse 902 eingebracht wird. Dazu sind die Einfassungen der Linsen bombiert gestaltet, so dass ein im Querschnitt konvex bogenförmiger Ring die jeweilige Linse nahe an ihren Kanten einspannt. In seiner Mitte hat der Ring seinen maximalen Durchmesser, mit dem er gegen die Innenwandung der äußeren Hülse 902 drängt. Durch die Bombierung der Einfassung ist die innere Hülse 904 verformbar. Damit sind Schwächungs- / Dehnungszonen 910, 912 realisiert, die als an der inneren Hülse und/oder der äußeren Hülse am Innen- und Außenumfang verteilte, radial nach außen oder innen orientierte Pressstellen gestaltet sind.

Die Linsen der Linsenanordnung sind in der inneren Hülse 904 eingelegt. Der Innenquerschnitt der äußeren Hülse 902 und der Außenquerschnitt der inneren Hülse 904 sind so zueinander dimensioniert, dass die äußere Hülse die innere Hülse in radialer Richtung gegen die Linsen drängt.

Fig. 10 veranschaulicht eine Variante, bei der anstelle der separaten Dichtung eine an die innere Hülse angeformte Dichtlippe vorgesehen ist. In dieser Variante hat jede Linse der Linsenanordnung 906 eine eigene Innenhülse 904a, 904b. In diesem Fall bestimmt die räumliche Anordnung der Linsen in der Außenhülse deren Position zueinander. Die Blende 908 für die Begrenzung des Lichtstrahls kann auch separat in die Außenhülse gesteckt sein, oder Teil einer der Innenhülsen sein.

Die äußere Hülse 902 hat Einführfasen 914 mit einem Fasenwinkel von etwa 8 °. Dies erleichtert das Überschieben der äußeren über die innere Hülse. Die innere und die äußere Hülse sind in der gezeigten Variante aus Kunststoff-Material unterschiedlicher Festigkeit oder Duktilität mit abweichenden Anteilen plastischer und elastischer Verformbarkeit gebildet. Anstelle des Kunststoffs kann auch Aluminium oder anderes Material verwendet werden. In einer weiteren Variante ist zwischen den Linsen und der inneren Hülse und zwischen der inneren und der äußeren Hülse, oder zwischen einer oder beiden Linsen und der äußeren Hülse 902 ein zusätzlich eingelegtes Dichtelement 916 aus Gummi oder Kunststoff, oder ein Klebstoff vorgesehen.

Die nachstehend beschriebenen Varianten sowie deren Aufbau- und Betriebsaspekte dienen lediglich dem besseren Verständnis der Struktur, der Funktionsweise und der Eigenschaften; sie schränken die Offenbarung nicht etwa auf die Ausführungsbeispiele ein. Die Fig. sind teilweise schematisch, wobei wesentliche Eigenschaften und Effekte zum Teil deutlich vergrößert dargestellt sind, um die Funktionen, Wirkprinzipien, technischen Ausgestaltungen und Merkmale zu verdeutlichen. Dabei kann jede Funktionsweise, jedes Prinzip, jede technische Ausgestaltung und jedes Merkmal, welches/welche in den Fig. oder im Text offenbart ist / sind, mit allen Ansprüchen, jedem Merkmal im Text und in den anderen Fig., anderen Funktionsweisen, Prinzipien, technischen Ausgestaltungen und Merkmalen, die in dieser Offenbarung enthalten sind oder sich daraus ergeben, frei und beliebig kombiniert werden, so dass alle denkbaren Kombinationen der beschriebenen Varianten zuzuordnen sind. Dabei sind auch Kombinationen zwischen allen einzelnen Ausführungen im Text, das heißt in jedem Abschnitt der Beschreibung, in den Ansprüchen und auch Kombinationen zwischen verschiedenen Varianten im Text, in den Ansprüchen und in den Fig. umfasst, solange sie innerhalb des durch die beigefügten Ansprüche definierten Schutzumfangs liegen. Der Schutzumfang wird einzig und allein durch die Ansprüche definiert.

## Patentansprüche

1. Ein berührungslos messendes Messsystem mit einem einen Lichtsenderteil (14) und einen Lichtempfängerteil (16) aufweisenden berührungslos messenden Messgerät, zur Positionsbestimmung eines Werkzeuges oder zur Bestimmung der längsten Schneide eines rotierenden Werkzeuges in einer Werkzeugmaschine, wobei
- dem Lichtsenderteil (14) und/oder dem Lichtempfängerteil (16) eine optische Linsenanordnung (906) zur Formung und Fokussierung eines Lichtstrahls (24) von dem Lichtsenderteil (14) zu dem Lichtempfängerteil (16) zugeordnet ist, wobei die optische Linsenanordnung (906) in einer Linsenfassung aufgenommen ist,
**gekennzeichnet dadurch, dass**
die Linsenfassung eine innere und
eine äußere, jeweils zumindest abschnittsweise zylindrische Hülse (904, 902) aufweist,
- die Linsenanordnung (906) in der inneren Hülse (904) eingesetzt ist, die von der äußeren Hülse (902) zumindest teilweise eingefasst ist, und die Linsenfassung mit der Linsenanordnung (906) in einer Wandung des Lichtsenderteils (14) und/oder des Lichtempfängerteils (16) aufgenommen ist, wobei
- die äußere Hülse (902) relativ zur inneren Hülse (904) starr und formbeständig ist,
- die innere Hülse (904) dazu eingerichtet ist, beim Einbringen in die äußere Hülse (902) elastisch oder plastisch verformt zu werden, und
- die innere und/oder die äußere Hülse (904, 902) in Längsrichtung verlaufende Schwächungs- und/oder Dehnungszonen (910) aufweisen;
- die innere Hülse (904) die Linsenanordnung (906) geometrisch festlegt;
wobei die innere Hülse (904) und/oder die äußere Hülse (902) am Innen- und/oder Außenumfang verteilte, radial nach innen bzw. außen orientierte Pressstellen aufweist; und
die Linsen der Linsenanordnung (906) in der inneren Hülse (904) eingelegt sind und der Innenquerschnitt der äußeren Hülse (902) und der Außenquerschnitt der inneren Hülse (904) so zueinander dimensioniert sind, dass die äußere Hülse (902) die innere Hülse (904) in radialer Richtung gegen die Linsen drängt.

2. Das Messsystem zur berührungslosen Messung nach dem vorherigen Anspruch, wobei
- eine Lichtschrankenanordnung (12) durch den Lichtsenderteil (14) und den Lichtempfängerteil (16) gebildet ist, die jeweils einem Schenkel (18, 20) einer im Wesentlichen U-förmigen Tragestruktur (22) des Messgeräts zugeordnet sind.

3. Das Messsystem zur berührungslosen Messung nach dem vorherigen Anspruch, wobei die innere Hülse (904) als Blende für die Begrenzung des Lichtstrahls (24) wirkt.

4. Das Messsystem zur berührungslosen Messung nach einem der vorherigen Ansprüche, wobei die äußere Hülse (902) an einem Ende wenigstens eine Einführfase, vorzugsweise mit einem Fasenwinkel von 2° - 15°, besonders bevorzugt mit einem Fasenwinkel von 4° - 10° aufweist.

5. Das Messsystem zur berührungslosen Messung nach einem der vorherigen Ansprüche, wobei die innere und/oder die äußere Hülse (904, 902) aus Material unterschiedlicher Festigkeit oder Duktilität mit abweichenden Anteilen plastischer und elastischer Verformbarkeit wie Aluminium, Kunststoff, Buntmetall, Blei, Formgedächtnislegierung, jeweils in unterschiedlichen Härtegraden gebildet sind.

6. Das Messsystem zur berührungslosen Messung nach einem der vorherigen Ansprüche, wobei zwischen den Linsen und der inneren Hülse (904) und/oder der inneren (904) und der äußeren Hülse (902), oder zwischen einer Linse und der äußeren Hülse (902) ein zusätzlich eingelegtes Dichtelement aus Gummi oder Kunststoff, oder ein Klebstoff eingesetzt ist.

7. Das Messsystem zur berührungslosen Messung nach einem der vorherigen Ansprüche, wobei der Lichtsendeteil (14) einen Lichtstrahler und ein Photoelement umfasst, wobei
- dem Lichtsenderteil (14) und/oder dem Lichtempfängerteil (16) die optische Linsenanordnung (906) zur Formung und Fokussierung eines Lichtstrahls (24) zugeordnet ist, eine optische Rückkopplung erzielend, indem ein Teil der von dem Lichtstrahler in dem Lichtsenderteil (14) erzeugten Lichtleistung auf das in den Lichtstrahler integrierten Photoelement strahlt, und dieses Photoelement einen zur erzeugten Leistung proportionalen Strom erzeugt, um den Vorwärtsstrom durch den Lichtstrahler zu regeln, oder ein konstanter Strom fließt durch den Lichtstrahler, indem der Vorwärtsstrom auf einem bestimmten Wert gehalten wird.

8. Das Messsystem zur berührungslosen Messung nach einem der vorherigen Ansprüche, wobei
die optische Linsenanordnung (906)
- zur Formung und Fokussierung eines Lichtstrahls (24) eine sphärische oder asphärische Linse oder ein Licht beugendes Element aus Glas oder Kunststoff oder einer Kombination beider Materialien hat,
- von einer Lichtquelle beabstandet ist, und sie durchstrahlendes Licht kollimiert, divergiert oder konvergiert, wobei
- eine Blende (908) eine Ausbreitung des Lichts beschränkt, welche in die optische Linsenanordnung eingefügt oder dieser nachgeordnet ist, wobei die Blende (908) den Lichtstrahl (24) auf eine rotationssymmetrische oder teilweise rotationssymmetrische Intensitätsverteilung oder ein rundes Strahlprofil begrenzt, und wobei
- dieser Blende (908) eine sphärische oder asphärische Linse oder ein Licht beugendes Element aus Glas oder Kunststoff oder einer Kombination beider Materialien, nachgeordnet ist, die das durchstrahlende Licht kollimiert, divergiert oder auf eine gewünschte Fokusposition fokussiert.

## Claims

1. A contactless measuring system comprising a contactless measuring device having a light emitting part (14) and a light receiving part (16), for determining the position of a tool or for determining the longest cutting edge of a rotating tool in a machine tool, wherein
- an optical lens arrangement (906) for shaping and focusing a light beam (24) from the light transmitter part (14) to the light receiver part (16) is associated with the light transmitter part (14) and/or the light receiver part (16), the optical lens arrangement (906) being accommodated in a lens mount, **characterized in that** the lens mount has an inner and an outer sleeve (904, 902) which are each cylindrical at least in sections,
- the lens arrangement (906) is inserted in the inner sleeve (904) which is at least partially enclosed by the outer sleeve (902), and the lens mount with the lens arrangement (906) is received in a wall of the light transmitter part (14) and/or of the light receiver part (16), wherein
- the outer sleeve (902) is rigid and dimensionally stable relative to the inner sleeve (904),
- the inner sleeve (904) is adapted to be elastically or plastically deformed when inserted into the outer sleeve (902), and
- the inner and/or the outer sleeve (904, 902) have weakening and/or expansion zones (910) running in the longitudinal direction
- the inner sleeve (904) geometrically fixes the lens arrangement (906);
wherein the inner sleeve (904) and/or the outer sleeve (902) has radially inwardly or outwardly oriented pressing points distributed on the inner and/or outer circumference; and
the lenses of the lens arrangement (906) are inserted in the inner sleeve (904) and the inner cross-section of the outer sleeve (902) and the outer cross-section of the inner sleeve (904) are dimensioned relative to one another in such a way that the outer sleeve (902) presses the inner sleeve (904) in the radial direction against the lenses.

2. The measuring system for contactless measurement according to the previous claim, wherein
- a light barrier arrangement (12) is formed by the light transmitter part (14) and the light receiver part (16), which are each associated with a leg (18, 20) of a substantially U-shaped support structure (22) of the measuring instrument.

3. The measuring system for contactless measurement according to the previous claim, wherein the inner sleeve (904) acts as an aperture for limiting the light beam (24).

4. The measuring system for contactless measurement according to one of the previous claims, wherein the outer sleeve (902) has at least one insertion chamfer at one end, preferably with a chamfer angle of 2° - 15°, particularly preferably witha chamfer angle of 4° - 10°.

5. The measuring system for contactless measurement according to any one of the preceding claims, wherein the inner and/or the outer sleeve (904, 902) are formed of material of different strength or ductility with differing proportions of plastic and elastic deformability, such as aluminium, plastic, non-ferrous metal, lead, shape memory alloy, each in different degrees of hardness.

6. The measuring system for contactless measurement according to one of the preceding claims, wherein an additionally inserted sealing element of rubber or plastic, or an adhesive, is inserted between the lenses and the inner sleeve (904) and/or the inner (904) and the outer sleeve (902), or between a lens and the outer sleeve (902).

7. The non-contact measurement system according to any one of the preceding claims, wherein the light emitting part (14) comprises a light emitter and a photoelement, wherein
- the light emitter part (14) and/or the light receiver part (16) has associated therewith the optical lens arrangement (906) for shaping and focusing a light beam (24), achieving optical feedback by irradiating a portion of the light power generated by the light emitter in the light emitter part (14) to the photoelement integrated in the light emitter, and said photoelement generates a current proportional to the power generated to regulate the forward current through the light or a constant current flows through the light emitter by maintaining the forward current at a certain value.

8. The measuring system for contactless measurement according to any one of the preceding claims, wherein
the optical lens assembly (906)
- has a spherical or aspherical lens or a light diffracting element of glass or plastic or a combination of both materials for shaping and focusing a light beam (24),
- is spaced from a light source and collimates, diverges or converges light passing through it, wherein
- a diaphragm (908) which is inserted into or downstream of the optical lens arrangement restricts propagation of the light, wherein the diaphragm (908) restricts the light beam (24) to a rotationally symmetrical or partially rotationally symmetrical intensity distribution or a round beam profile, and wherein
- downstream of this diaphragm (908) is a spherical or aspherical lens or a light-diffracting element made of glass or plastic or a combination of both materials, which collimates, diverges or focuses the transmitted light to a desired focal position.

## Revendications

1. Système de mesure sans contact comprenant un dispositif de mesure sans contact ayant une partie émettrice de lumière (14) et une partie réceptrice de lumière (16), pour déterminer la position d'un outil ou pour déterminer le bord de coupe le plus long d'un outil rotatif dans une machine-outil, dans lequel
- un agencement de lentilles optiques (906) pour la mise en forme et la focalisation d'un faisceau lumineux (24) de la partie émettrice de lumière (14) vers la partie réceptrice de lumière (16) est affecté à la partie émettrice de lumière (14) et/ou à la partie réceptrice de lumière (16), l'agencement de lentilles optiques (906) étant logé dans une monture de lentilles, **caractérisé en ce que** la monture de lentilles présente-un manchon intérieur et un manchon extérieur (904, 902), chacun cylindrique au moins en sections,
- l'agencement de lentilles (906) est inséré dans le manchon intérieur (904) qui est au moins partiellement entouré par le manchon extérieur (902), et la monture de lentille avec l'agencement de lentille (906) est logée dans une paroi de la partie d'émetteur de lumière (14) et/ou de la partie de récepteur de lumière (16), dans lequel
- le manchon extérieur (902) est rigide et dimensionnellement stable par rapport au manchon intérieur (904), **caractérisé en ce que**
- le manchon intérieur (904) est adapté pour être déformé élastiquement ou plastiquement lorsqu'il est inséré dans le manchon extérieur (902), et- le manchon intérieur et/ou le manchon extérieur (904, 902) présentent des zones d'affaiblissement et/ou d'expansion (910) s'étendant dans la direction longitudinale
- le manchon intérieur (904) fixe géométriquement l'agencement de lentilles (906); dans lequel le manchon intérieur (904) et/ou le manchon extérieur (902) a des points de pression répartis sur la circonférence intérieure et/ou extérieure et orientés radialement vers l'intérieur ou l'extérieur; et
- le manchon intérieur (904) et/ou le manchon extérieur (902) a des points de pression répartis sur la circonférence intérieure et/ou extérieure et orientés radialement vers l'intérieur ou l'extérieur; et
les lentilles de l'agencement de lentilles (906) sont insérées dans le manchon intérieur (904) et la section transversale intérieure du manchon extérieur (902) et la section transversale extérieure du manchon intérieur (904) sont dimensionnées l'une par rapport à l'autre de telle sorte que le manchon extérieur (902) presse le manchon intérieur (904) dans la direction radiale contre les lentilles.

2. Le système de mesure pour la mesure sans contact selon la revendication précédente, dans lequel
- un agencement de barrière lumineuse (12) est formé par la partie d'émission de lumière (14) et la partie de réception de lumière (16), qui sont chacune associées à - une branche (18, 20) d'une structure de support sensiblement en forme de U (22) de l'instrument de mesure.

3. Le système de mesure sans contact selon la revendication précédente, dans lequel le manchon interne (904) agit comme une ouverture pour limiter le faisceau lumineux (24).

4. Le système de mesure sans contact selon l'une des revendications précédentes, dans lequel le manchon extérieur (902) présente à une extrémité au moins un chanfrein d'insertion, de préférence avec un angle de chanfrein de 2° - 15°, de manière particulièrement préférée avec unangle de chanfrein de 4° - 10°.

5. Le système de mesure sans contact selon l'une quelconque des revendications précédentes, dans lequel le manchon intérieur et/ou le manchon extérieur (904, 902) sont formés d'un matériau de résistance ou de ductilité différente avec des proportions différentes de déformabilité plastique et élastique, tel que l'aluminium, le plastique, le métal non ferreux, le plomb, l'alliage à mémoire de forme, chacun à différents degrés de dureté.

6. Le système de mesure sans contact selon l'une des revendications précédentes, dans lequel un élément d'étanchéité en caoutchouc ou en plastique, ou un adhésif, inséré en supplément, est inséré entre les lentilles et le manchon intérieur (904) et/ou le manchon intérieur (904) et le manchon extérieur (902), ou entre une lentille et le manchon extérieur (902).

7. Le système de mesure sans contact selon l'une quelconque des revendications précédentes, dans lequel la partie émettrice de lumière (14) comprend un émetteur de lumière et un photoélément, où
- la partie d'émetteur de lumière (14) et/ou la partie de récepteur de lumière (16) sont associées à l'agencement de lentille optique (906) pour former et focaliser un faisceau lumineux (24), réalisant une rétroaction optique en irradiant une partie de la puissance lumineuse générée par l'émetteur de lumière dans la partie d'émetteur de lumière (14) sur le photoélément intégré dans l'émetteur de lumière et ledit photoélément génère un courant proportionnel à la puissance générée pour réguler le courant direct à travers l'émetteur de lumière, ou un courant constant circule à travers l'émetteur de lumière en maintenant le courant direct à une certaine valeur.

8. le système de mesure sans contact selon l'une quelconque des revendications précédentes, dans lequel
l'ensemble de lentilles optiques (906)
- possède une lentille sphérique ou asphérique ou un élément de diffraction de la lumière en verre ou en plastique ou une combinaison des deux matériaux pour former et focaliser un faisceau lumineux (24)
- est espacé d'une source de lumière, et collimate, diverge ou converge la lumière passant à travers lui, dans lequel
- un diaphragme (908) restreint la propagation de la lumière, qui est inséré dans ou en aval de l'agencement de lentilles optiques, dans lequel le diaphragme (908) restreint le faisceau lumineux (24) à une distribution d'intensité symétrique de manière rotative ou partiellement symétrique de manière rotative ou un faisceau rond profile, et dans lequel
- en aval de ladite ouverture (908) se trouve une lentille sphérique ou asphérique ou un élément de diffraction de la lumière fabriqué en verre ou en plastique ou une combinaison des deux matériaux, qui collimate, diverge ou focalise la lumière transmise vers une position focale souhaitée.
